# EUROPEAN PATENT SPECIFICATION

(11) **EP 3 378 719 B1**
(45) Date of publication and mention of the grant of the patent: **04.05.2022**
(21) Application number: 18162979.1
(22) Date of filing: 20.03.2018
(51) Int. Cl.: B60W 20/15, B60W 30/192, B60W 20/16, B60W 20/11, B60W 10/06, B60W 10/08

(54) **METHOD OF THERMAL MANAGEMENT OF AN INTERNAL COMBUSTION ENGINE OF A HYBRID PROPULSION SYSTEM**
VERFAHREN ZUM THERMOMANAGEMENT DES VERBRENNUNGSMOTORS EINES HYBRIDANTRIEBSTRANGS
PROCÉDÉ DE GESTION THERMIQUE DU MOTEUR À COMBUSTION D'UN SYSTÈME DE PROPULSION HYBRIDE

(30) Priority: 20.03.2017 IT 201700030582
(43) Date of publication of application: 26.09.2018
(73) Proprietor: Iveco S.p.A., 10156 Torino (IT)
(72) Inventor: BERNARDINI, Alessandro, 16123 Genova (IT); PERRONE, Attilio, 16010 Serra Ricco' (IT)
(74) Representative: Studio Torta S.p.A.

(56) References cited:
- EP-A2- 1 182 074
- EP-A2- 2 907 716
- WO-A1-2014/070086
- DE-A1-102006 051 832
- DE-B3-102015 204 090

## Description

### PRIORITY CLAIM

This application claims priority from Italian Patent Application No. 102017000030582 filed on March 20, 2017.

### Technical field of the invention

The invention relates to the field of hybrid propulsion systems comprising an internal combustion engine and an electric motor-generator, which are connected so as to cooperate in the propulsion of a vehicle.

WO2014070086 discloses the implementation of the electric motor-generator to produce a negative torque useful to warm up the internal combustion engine, by implementing a limiting torque suitable to avoid white smoke delivery.

### State of the art

A quick heating of the internal combustion engine, hereinafter referred to as "heat engine", in cold-starting conditions is fundamental in order to obtain the heating of the exhaust gas after-treatment device (ATS).

The solution which is most frequently used to obtain this result is that of throttling the exhaust line with a valve, so as to increase counter-pressure and cause the heat engine to operate in a point with a greater load. US20060213186 describes a solution in which the electric motor-generator of the hybrid propulsion system is used to control the heating of the ATS.

However, the solution disclosed in said document is not ideal.

### Summary of the invention

The object of the invention is to provide a method of thermal management of an internal combustion engine of a hybrid propulsion system.

The idea on which the invention is based is that of offering to the heat engine, by means of said electric motor-generator, a resistant torque which is complementary to one requested by the driver, so that the total torque delivered by the heat engine moves on a predetermined limited torque curve, which is different from the nominal torque curve of the heat engine.

According to the invention, said limited torque curve is calculated and changed based on the temperature of the engine oil and/or based on the pressure thereof.

The temperature and pressure of the oil are fundamental to define the viscosity of the oil affecting the lubrication of the bearings, especially of the turbine. Indeed, the limitation curve preferably is a function of the manufacturing tolerances of the internal combustion engine. Preferably, the oil pressure is measured downstream and of and in a point far from the main gallery, for example in the crankcase of the turbine, so as to have evidence of the efficiency of the lubrication system.

Contrary to what disclosed in US20060213186, after the cranking of the internal combustion engine, the thermal management is operated based on operating parameters of the heat engine and only indirectly or subsequently based on operating parameters of the ATS.

The ATS, according to the laws currently enforced, comprises a particulate filter, which avoids any grade of smoke independently of the nominal torque curve implemented.

This happens because the aforesaid limited torque curve is a function of the temperature and/or pressure of the lubricating oil of the heat engine and, hence, of the efficiency conditions of the heat engine.

According to the invention, the limited torque curve implemented during the heating of the heat engine is changed as follows:
- in a first revolution interval having as a lower end the idle speed at least up to a maximum torque speed, the nominal torque curve is multiplied by a coefficient k1 < 1, which is a function of the temperature of the engine oil and/or of the pressure thereof; said first coefficient is unvaried with respect to the engine rotation speed;
- in a second speed interval, which is contiguous to the previous one and is delimited at the top by a maximum rotation speed, the nominal torque curve is multiplied by a coefficient k2 < 1, which is a function of the temperature of the engine oil and/or of the pressure thereof and is inversely proportional to the number of revolutions.

Therefore, in a given operating condition:
- the first coefficient substantially is a number < 1, which translates the nominal torque curve towards smaller values, though not changing the shape thereof, whereas
- the second coefficient is a straight line with a negative inclination, which pushes the torque curve towards smaller and smaller values as the maximum rotation speed is reached.

According to the invention, the heat engine is not simply limited in terms of torque that can be delivered by the aforesaid limited torque curve. It rather moves exactly on said curve, as the torque that is not requested by the driver is anyway complemented by the electric motor-generator.

Preferably, this torque complementing strategy is performed as long as the accelerator pedal is stable in a position and it is immediately interrupted when the driver changes the position of the accelerator pedal.

Preferably, this strategy is interrupted only when the driver presses harder on the accelerator pedal in order to obtain an acceleration of the vehicle. By so doing, advantageously, an engine torque is provided, which allows the vehicle to accelerate. If necessary the electric motor-generator can cooperate with the heat engine, in relation to the derivative of the angle of the accelerator pedal. In other words, when the driver quickly increases the position of the accelerator, the electric motor-generator goes from working as a generator to working as a motor and, as soon as the position of the pedal stabilizes, it goes back to operating as a generator, as described above; therefore, this method is completely transparent for the driver of the vehicle.

Advantageously, the heat engine cannot be damaged by the heating strategy and it reaches an optimal heating in the shortest time possible.

Only after the oil temperature and/or pressure have met predetermined requirements, then the heating strategy can go on and implement an ATS-oriented, such as, for example, the one disclosed in US20060213186.

According to a preferred variant of the invention, the cranking of the heat engine takes place only after having checked whether the vehicle batteries have a capacity that is sufficient to store the energy produced by the electric motor-generator during the aforesaid strategy.

Therefore, at first, the state of charge (SOC) of the vehicle batteries is acquired. This parameter has a value smaller than 1. Its ones' complement is calculated and multiplied by the nominal capacity of the batteries. Unless there are possible corrective factors, which, for example, depend on the state of health of the batteries, a maximum storable energy value is calculated and compared with an estimate of the energy produced during the heating strategy.

If this estimated energy exceeds the storable energy, then the vehicle is operated in electric mode until the capacity of the batteries is sufficient to implement the aforesaid heating strategy.

The estimate of the energy produced during the heating strategy evidently is a function both of the initial temperature of the engine oil and of the energy requested by the driver to move the vehicle during the aforesaid engine heating phase. Preferably, the energy requested by the driver is estimated on a statistical basis. Therefore, a processing unit can perform said estimate having, previously stored in it, a look-up table where the mean toque requested by the driver and the temperature of the engine oil represent the two inputs of the look-up table. Once the torque requested by the driver is substantially known, from the look-up table, based on the temperature of the engine oil, a pre-calculated energy value is obtained.

This pre-calculated energy value, for example, can be empirically obtained by means of engine stand tests.

The subject-matter of the invention comprises a method of thermal management of an internal combustion engine.

The subject-matter of the invention further includes a hybrid propulsion system, a computer program and a computer readable means configured to implement the aforesaid method.

### Brief description of the figures

Further objects and advantages of the invention will be best understood upon perusal of the following detailed description of an embodiment thereof (and of relative variants) with reference to the accompanying drawings merely showing non-limiting examples, wherein:

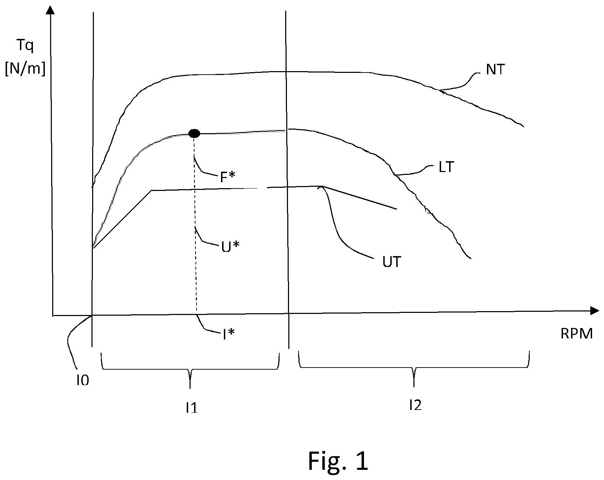

figure 1 shows a nominal torque curve modified according to the invention.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

### Detailed description of embodiments

Figure 1 shows a nominal torque curve NT of a heat engine associated with a transmission. The transmission further is associated with an electric motor-generator, which is designed to completely or partly contribute to the propulsion of the vehicle.

According to the invention, after the engine has been started and has reached the idle speed indicated with I0 in figure 1, in cold starting conditions,
- the nominal torque curve NT is changed, in particular lowered, thus obtaining a limited torque curve LT, which is distinct from the nominal curve,
- the electric motor generator is controlled so as to offer to said internal combustion engine a resistant torque, which is complementary to a torque UT requested by the driver, so that the total torque delivered by the internal combustion engine moves on said limited torque curve LT.

In figure 1, the torque requested by the user UT is simply supposed, but it can change in an unpredictable manner. Nevertheless, the electric motor generator is configured to complement the torque requested by the user point by point, so that the internal combustion engine always moves on the limited torque curve LT. For example, in figure 1, the rotation speed I* corresponds to a torque value U* requested by the driver, to a braking torque value F* offered by the electric motor-generator and to the dark dot, which represents the value of the total torque delivered by the heat engine in I*, this value belonging to the limited torque curve LT.

Said limited torque curve is not fixed, but it varies and changes depending on the operating conditions of the heat engine.

Acording to the invention, it is a function of the temperature of the engine oil and/or of the pressure thereof.

Preferably, the oil pressure is measured downstream and of and in a point far from the main gallery, for example in the crankcase of the turbine of the turbocharger assembly of the engine, so as to have monitor the efficiency of the lubrication system.

A possible strategy for the heating of the ATS - device for the after-treatment of the exhaust gases produced by the heat engine - is operated only after the engine oil or the relative cooling fluid has reached a predetermined value. The limited torque curve basically depends on the manufacturing tolerances of the internal combustion engine and on the viscosity features of the oil.

According to the invention, the limited torque curve implemented during the heating of the heat engine is changed as follows:
- in a first revolution interval I1 having as a lower end the idle speed I0 at least up to a maximum torque speed, the nominal torque curve is multiplied by a first coefficient k1 < 1, which is a function of the temperature of the engine oil and/or of the pressure thereof; said first coefficient is unvaried with respect to the engine rotation speed;
- in a second speed interval I2, which is contiguous to the previous one I1 and is delimited at the top by a maximum rotation speed (not indicated), the nominal torque curve is multiplied by a coefficient k2 < 1, which is a function of the temperature of the engine oil and/or of the pressure thereof and further is inversely proportional to the number of revolutions.

Therefore, in a given operating condition:
- k1 substantially is a number < 1, which translates the nominal torque curve towards smaller values, though not changing the shape thereof, whereas
- k2 is a straight line with a negative inclination, which pushes the torque curve towards smaller and smaller values as the maximum rotation speed is reached.

According to a preferred variant of the invention, the cranking of the heat engine takes place only after having checked whether the vehicle batteries have a capacity that is sufficient to store the energy produced by the electric motor-generator during the aforesaid strategy.

Therefore, at first, the state of charge (SOC) of the vehicle batteries is acquired. This parameter has a value smaller than 1. Its ones' complement is calculated and multiplied by the nominal capacity of the batteries, so as to identify the residual capacity of the vehicle batteries, unless there are possible corrective factors, which, for example, depend on the state of health of the batteries. Said residual capacity is compared with an estimate of the energy produced by the motor-generator during the heating strategy.

If this estimated energy exceeds the storable energy, then the vehicle is operated in electric mode until the capacity of the batteries is sufficient to implement the aforesaid heating strategy.

Subsequently, the heat engine can be activated and the heating strategy can be operated as described above.

The estimate of the energy produced during the heating strategy evidently is a function both of the initial temperature of the engine oil and of the energy requested by the driver to move the vehicle during the aforesaid engine heating phase. Preferably, the energy requested by the driver is estimated based on a statistical requested torque value.

Therefore, a processing unit ECU can perform said estimate having, previously stored in it, a look-up table where the mean toque requested by the driver and the temperature of the engine oil represent the two inputs of the look-up table. Once the torque requested by the driver is statistically known and the temperature of the engine oil has been acquired, by means of the look-up table, a pre-calculated energy value is obtained.

This pre-calculated energy value, for example, can be empirically obtained by means of engine stand tests.

This invention is implemented by means of a computer program comprising encoding means for carrying out all of the steps of the method according to the invention, when the program is run on a computer. Therefore, the scope of protection is extended to said computer program and, furthermore, to means that can be read by a computer and comprise a recorded message, said means that can be read by a computer comprising program encoding means adapted to perform all the steps of the method according to the invention, when the program is run on a computer.

The non-limiting example described above can be subjected to variations, within the scope of protection of the invention as defined in the appended claims.

## Claims

1. A method of thermal management of an internal combustion engine of a hybrid propulsion system comprising an internal combustion engine and an electric motor-generator connected to a transmission, the method, in cold-start conditions of the internal combustion engine, comprises at least the following steps:
- acquiring and modifying a nominal torque curve (NT) of the internal combustion engine to obtain a limited torque curve (LT), distinct from said nominal torque curve (NT),
- controlling said electric motor-generator so as to provide a resistant torque, to said internal combustion engine, complementary to a required torque (UT), so that a total torque value supplied by the internal combustion engine belongs to said limited torque curve (LT),
**characterized in that** said limited torque curve is variable as a function of an operating condition of said internal combustion engine and is obtained from said nominal torque curve as follows:
- in a first revolution interval (I1) having as a lower end an idle speed (I0) at least up to a maximum torque speed, said nominal torque curve is multiplied by a first coefficient k1 < 1, as a function of the temperature of the engine oil and/or of the pressure thereof and unvaried with respect to the engine rotation speed;
- in a second speed interval (I2) contiguous to said first interval (I1) and delimited at the high end by a maximum rotation speed, the nominal torque curve is multiplied by a coefficient k2 < 1, as a function of the temperature of the engine oil and/or of the pressure thereof and further inversely proportional to the rotation speed of the internal combustion engine.

2. The method according to claim 1, wherein said limited torque curve is a function of a temperature of a lubricating oil of said internal combustion engine.

3. The method according to claim 2, wherein said limited torque curve is also a function of a pressure of the lubricating oil.

4. The method according to claim 3, wherein said pressure is measured downstream and at a remote point from a main gallery of a lubrication circuit of the internal combustion engine, for example, at the crankcase of a turbine turbocharger assembly of the internal combustion engine.

5. The method according to any one of the preceding claims comprising, prior to a start of the internal combustion engine, a procedure to verify that a sufficient capacity is provided in the vehicular batteries so as to store power produced by said electric motor-generator during said thermal management to provide said resistant torque to the internal combustion engine.

6. The method according to claim 5, wherein said verification procedure comprises the following preliminary steps:
- acquiring a charge state (SOC) of said vehicle batteries;
- calculating a residual capacity by multiplying a ones' complement of said charge state for a nominal capacity of the batteries;
- estimating the energy produced by the motor-generator during said thermal management to provide the resistant torque to the internal combustion engine,
- comparing said remaining capacity with said estimate, and if results that said estimated energy exceeds said residual capacity, then
- starting the internal combustion engine and activating said thermal management, otherwise
- inhibiting the ignition of the internal combustion engine.

7. The method according to claim 6, wherein said estimate of the energy produced by the electric motor-generator is a function both of the initial temperature of the engine oil and of the energy required for propulsion.

8. The method according to claim 6 or 7, wherein said energy required is estimated on the basis of a statistical value of a requested torque.

9. The method according to any one of the preceding claims, wherein said control of said electric motor-generator to provide resistant torque to the internal combustion engine is obtained when a position of a vehicular accelerator pedal is considered stable and interrupted when said position is varied.

10. A computer program comprising program encoding means adapted to perform all the steps of any one of the claims from 1 to 9, when said program is run on a computer.

11. A computer-readable means comprising a recorded program, said computer-readable means comprising program encoding means adapted to perform all the steps of any one of the claims from 1 to 9, when said program is run on a computer.

12. A hybrid propulsion system comprising an internal combustion engine and an electric motor-generator connected to a transmission wherein, in the cold-start conditions of the internal combustion engine, the system is configured to perform at least the following steps:
- acquiring and modifying a nominal torque curve (NT) of the internal combustion engine to obtain a limited torque curve (LT), distinct from said nominal torque curve (NT),
- controlling said electric motor-generator so as to provide a resistant torque, to said internal combustion engine, complementary to a required torque (UT), so that the total torque supplied by the internal combustion engine is on said limited torque curve (LT),
**characterized in that** said limited torque curve is variable as a function of an operating condition of said internal combustion engine and is obtained from said nominal torque curve as follows:
- in a first revolution interval (I1) having as a lower end an idle speed (I0) at least up to a maximum torque speed, said nominal torque curve is multiplied by a first coefficient k1 < 1, as a function of the temperature of the engine oil and/or of the pressure thereof and unvaried with respect to the engine rotation speed;
- in a second speed interval (I2) contiguous to said first interval (I1) and delimited at the high end by a maximum rotation speed, the nominal torque curve is multiplied by a coefficient k2 < 1, as a function of the temperature of the engine oil and/or of the pressure thereof and further inversely proportional to the rotation speed of the internal combustion engine.

## Patentansprüche

1. Verfahren zum thermischen Management eines Verbrennungsmotors eines Hybridantriebssystems, welches einen Verbrennungsmotor und einen elektrischen Motor-Generator umfasst, der mit einem Getriebe verbunden ist, welches Verfahren unter Kaltstartbedingungen des Verbrennungsmotors zumindest die folgenden Schritte umfasst:
- Ermittlung und Anpassung einer Nenndrehmoment-Kurve (NT) des Verbrennungsmotors, um eine Grenzdrehmoment-Kurve (LT) zu erhalten, die sich von der Nenndrehmoment-Kurve (NT) unterscheidet,
- Steuerung des elektrischen Motor-Generators, zur Schaffung eines Widerstandsdrehmoments zu dem Verbrennungsmotor, komplementär zu einem erforderlichen Drehmoment (UT), so dass ein Gesamtdrehmomentwert, der von dem Verbrennungsmotor geliefert wird, zu der Grenzdrehmoment-Kurve (LT) gehört,
**dadurch gekennzeichnet, dass** die Grenzdrehmoment-Kurve als eine Funktion einer Betriebsbedingung des Verbrennungsmotors variabel ist und aus der Nenndrehmoment-Kurve wie folgt erhalten wird:
- in einem ersten Drehzahlintervall (I1), welches als unteres Ende eine Leerlaufgeschwindigkeit (I0) aufweist, bis zu einer maximalen Drehmomentgeschwindigkeit, wird die Nenndrehmoment-Kurve mit einem ersten Koeffizienten k1 < 1 multipliziert, der eine Funktion der Temperatur des Motoröls und/oder des Drucks desselben ist und nicht variabel bezüglich der Motordrehzahl ist;
- in einem zweiten Geschwindigkeitsintervall (I2), welches sich an das erste Intervall (I1) anschließt und welches am oberen Ende durch eine maximale Drehzahl begrenzt wird, wird die Nenndrehmoment-Kurve multipliziert mit einem Koeffizienten k2 < 1, der eine Funktion der Temperatur des Motoröls und/oder des Drucks desselben ist und ferner umgekehrt proportional zu der Drehzahl des Verbrennungsmotors ist.

2. Verfahren gemäß Anspruch 1, bei welchem die Grenzdrehmoment-Kurve eine Funktion einer Temperatur eines Schmieröls des Verbrennungsmotors ist.

3. Verfahren gemäß Anspruch 2, bei welchem die Grenzdrehmoment-Kurve ferner eine Funktion eines Drucks des Schmieröls ist.

4. Verfahren gemäß Anspruch 3, bei welchem der Druck stromabwärts und an einem entfernten Punkt von einem Hauptkanal eines Schmiermittelkreislaufs des Verbrennungsmotors ist, beispielsweise am Kurbelgehäuse einer Turbinen-Turbolader-Anordnung des Verbrennungsmotors.

5. Verfahren gemäß einem der vorhergehenden Ansprüche, umfassend, vor dem Start des Verbrennungsmotors, eine Prozedur zur Feststellung, dass in den Fahrzeugbatterien ausreichend Kapazität vorhanden ist, um von dem elektrischen Motor-Generator während des thermischen Managements erzeugte Energie gespeichert werden kann, zur Bereitstellung des Widerstandsdrehmoments zu dem Verbrennungsmotor.

6. Verfahren gemäß Anspruch 5, bei welchem die Feststellungsprozedur die folgenden vorbereitenden Schritte umfasst:
- Ermittlung eines Ladungszustands (SOC) der Fahrzeugbatterien;
- Berechnung einer Restkapazität durch Multiplikation eines Einerkomplements des Ladungszustands zu einer Nennkapazität der Batterien;
- Schätzung der Energie, die von dem Motor-Generator während des thermischen Managements produziert wird, zur Bereitstellung des Widerstandsdrehmoments zu dem Verbrennung smotor,
- Vergleichen der Restkapazität mit der Schätzung, und falls diese ergibt, dass die geschätzte Energie die Restkapazität überschreitet, dann
- Starten des Verbrennungsmotors und Aktivieren des thermischen Managements, andernfalls
- Hemmen der Zündung des Verbrennungsmotors.

7. Verfahren gemäß Anspruch 6, bei welchem die Schätzung der Energie, die von dem elektrischen Motor-Generator produziert wird, eine Funktion sowohl der Anfangstemperatur des Motoröls als auch der für den Antrieb erforderlichen Energie ist.

8. Verfahren gemäß Anspruch 6 oder 7, bei welchem die erforderliche Energie auf Grundlage eines statistischen Werts eines abgefragten Drehmoments geschätzt wird.

9. Verfahren gemäß einem der vorhergehenden Ansprüche, bei welchem die Steuerung des elektrischen Motor-Generators zur Bereitstellung eines Widerstandsdrehmoments zu dem Verbrennungsmotor erhalten wird, wenn eine Position eines Fahrzeug-Beschleunigungspedals als stabil betrachtet wird und unterbrochen wird, wenn sich seine Position verändert.

10. Computerprogramm, umfassend Programmcode-Mittel, ausgebildet zur Durchführung aller Schritte gemäß einem der Ansprüche 1 bis 9, wenn das Programm auf einem Computer ausgeführt wird.

11. Computerlesbare Mittel, umfassend ein aufgezeichnetes Programm, welches computerlesbaren Mittel Programmcode-Mittel umfassen, ausgebildet zur Durchführung aller Schritte gemäß einem der Ansprüche 1 bis 9, wenn das Programm auf einem Computer ausgeführt wird.

12. Hybrid-Antriebssystem, umfassend einen Verbrennungsmotor und einen elektrischen Motor-Generator, der mit einem Getriebe verbunden ist, wobei unter Kaltstartbedingungen des Verbrennungsmotors das System dazu konfiguriert ist, zumindest die folgenden Schritte auszuführen:
- Ermittlung und Anpassung einer Nenndrehmoment-Kurve (NT) des Verbrennungsmotors, um eine Grenzdrehmoment-Kurve (LT) zu erhalten, die sich von der Nenndrehmoment-Kurve (NT) unterscheidet,
- Steuerung des elektrischen Motor-Generators, zur Schaffung eines Widerstandsdrehmoments zu dem Verbrennungsmotor, komplementär zu einem erforderlichen Drehmoment (UT), so dass ein Gesamtdrehmomentwert, der von dem Verbrennungsmotor geliefert wird, auf der Grenzdrehmoment-Kurve (LT) liegt,
**dadurch gekennzeichnet, dass** die Grenzdrehmoment-Kurve als eine Funktion einer Betriebsbedingung des Verbrennungsmotors variabel ist und aus der Nenndrehmoment-Kurve wie folgt erhalten wird:
- in einem ersten Drehzahlintervall (I1), welches als unteres Ende eine Leerlaufgeschwindigkeit (I0) aufweist, bis zu einer maximalen Drehmomentgeschwindigkeit, wird die Nenndrehmoment-Kurve mit einem ersten Koeffizienten k1 < 1 multipliziert, der eine Funktion der Temperatur des Motoröls und/oder des Drucks desselben ist und nicht variabel bezüglich der Motordrehzahl ist;
- in einem zweiten Geschwindigkeitsintervall (I2), welches sich an das erste Intervall (I1) anschließt und welches am oberen Ende durch eine maximale Drehzahl begrenzt wird, wird die Nenndrehmoment-Kurve multipliziert mit einem Koeffizienten k2 < 1, der eine Funktion der Temperatur des Motoröls und/oder des Drucks desselben ist und ferner umgekehrt proportional zu der Drehzahl des Verbrennungsmotors ist.

## Revendications

1. Méthode de gestion thermique d'un moteur à combustion interne d'un système de propulsion hybride comprenant un moteur à combustion interne et un moteur-générateur électrique reliés à une transmission, la méthode, dans des conditions de démarrage à froid du moteur à combustion interne, comprend au moins les étapes suivantes :
- l'acquisition et la modification d'une courbe de couple nominal (NT) du moteur à combustion interne pour obtenir une courbe de couple limité (LT), distincte de ladite courbe de couple nominal (NT),
- la commande dudit moteur-générateur électrique de façon à fournir un couple résistant, audit moteur à combustion interne, complémentaire d'un couple exigé (UT), de façon à ce qu'une valeur de couple total délivrée par le moteur à combustion interne appartienne à ladite courbe de couple limité (LT),
**caractérisée en ce que** ladite courbe de couple limité est variable en fonction d'une condition de fonctionnement dudit moteur à combustion interne et est obtenue à partir de ladite courbe de couple nominal comme suit :
- dans un premier intervalle (I1) de révolution ayant comme extrémité inférieure un ralenti (I0) au moins jusqu'à un régime de couple maximal, ladite courbe de couple nominal est multipliée par un premier coefficient k1 < 1, en fonction de la température de l'huile moteur et/ou de la pression de celle-ci et ne variant pas par rapport à la vitesse de rotation de moteur ;
- dans un second intervalle de vitesse (I2) contigu audit premier intervalle (I1) et délimité à l'extrémité supérieure par une vitesse de rotation maximale, la courbe de couple nominal est multipliée par un coefficient k2 < 1, en fonction de la température de l'huile moteur et/ou de la pression de celle-ci et en outre inversement proportionnel à la vitesse de rotation du moteur à combustion interne.

2. Méthode selon la revendication 1, dans laquelle ladite courbe de couple limité dépend d'une température d'une huile de lubrification dudit moteur à combustion interne.

3. Méthode selon la revendication 2, dans laquelle ladite courbe de couple limité dépend également d'une pression de l'huile de lubrification.

4. Méthode selon la revendication 3, dans laquelle ladite pression est mesurée en aval et en un point distant d'une canalisation principale d'un circuit de lubrification du moteur à combustion interne, par exemple, au niveau du carter de vilebrequin d'un ensemble turbocompresseur de turbine du moteur à combustion interne.

5. Méthode selon l'une quelconque des revendications précédentes comprenant, avant un démarrage du moteur à combustion interne, une procédure pour vérifier qu'une capacité suffisante est fournie dans les batteries de véhicule de façon à stocker de l'énergie produite par ledit moteur-générateur électrique durant ladite gestion thermique pour fournir ledit couple résistant au moteur à combustion interne.

6. Méthode selon la revendication 5, dans laquelle ladite procédure de vérification comprend les étapes préliminaires suivantes :
- l'acquisition d'un état de charge (SOC) desdites batteries de véhicule ;
- le calcul d'une capacité résiduelle en multipliant un complément dudit état de charge pour une capacité nominale des batteries ;
- l'estimation de l'énergie produite par le moteur-générateur durant ladite gestion thermique pour fournir le couple résistant au moteur à combustion interne,
- la comparaison de ladite capacité restante à ladite estimation, et s'il en résulte que ladite énergie estimée dépasse ladite capacité résiduelle, alors
- le démarrage du moteur à combustion interne et le déclenchement de ladite gestion thermique, sinon
- le fait d'empêcher l'allumage du moteur à combustion interne.

7. Méthode selon la revendication 6, dans laquelle ladite estimation de l'énergie produite par le moteur-générateur électrique dépend à la fois de la température initiale de l'huile moteur et de l'énergie exigée pour une propulsion.

8. Méthode selon la revendication 6 ou 7, dans laquelle ladite énergie exigée est estimée sur la base d'une valeur statistique d'un couple demandé.

9. Méthode selon l'une quelconque des revendications précédentes, dans laquelle ladite commande dudit moteur-générateur électrique pour fournir un couple résistant au moteur à combustion interne est obtenue lorsqu'une position d'une pédale d'accélérateur de véhicule est considérée comme stable et interrompue lorsque ladite position varie.

10. Programme d'ordinateur comprenant des moyens de codage de programme adaptés pour réaliser toutes les étapes de l'une quelconque des revendications 1 à 9, lorsque ledit programme est exécuté sur un ordinateur.

11. Moyen lisible par ordinateur comprenant un programme enregistré, ledit moyen lisible par ordinateur comprenant des moyens de codage de programme adaptés pour réaliser toutes les étapes de l'une quelconque des revendications 1 à 9, lorsque ledit programme est exécuté sur un ordinateur.

12. Système de propulsion hybride comprenant un moteur à combustion interne et un moteur-générateur électrique reliés à une transmission dans lequel, dans les conditions de démarrage à froid du moteur à combustion interne, le système est configuré pour réaliser au moins les étapes suivantes :
- l'acquisition et la modification d'une courbe de couple nominal (NT) du moteur à combustion interne pour obtenir une courbe de couple limité (LT), distincte de ladite courbe de couple nominal (NT),
- la commande dudit moteur-générateur électrique de façon à fournir un couple résistant, audit moteur à combustion interne, complémentaire d'un couple exigé (UT), de façon à ce que le couple total délivré par le moteur à combustion interne soit sur ladite courbe de couple limité (LT),
**caractérisé en ce que** ladite courbe de couple limité est variable en fonction d'une condition de fonctionnement dudit moteur à combustion interne et est obtenue à partir de ladite courbe de couple nominal comme suit :
- dans un premier intervalle (I1) de révolution ayant comme extrémité inférieure un ralenti (I0) au moins jusqu'à un régime de couple maximal, ladite courbe de couple nominal est multipliée par un premier coefficient k1 < 1, en fonction de la température de l'huile moteur et/ou de la pression de celle-ci et ne variant pas par rapport à la vitesse de rotation de moteur ;
- dans un second intervalle de vitesse (I2) contigu audit premier intervalle (I1) et délimité à l'extrémité supérieure par une vitesse de rotation maximale, la courbe de couple nominal est multipliée par un coefficient k2 < 1, en fonction de la température de l'huile moteur et/ou de la pression de celle-ci et en outre inversement proportionnel à la vitesse de rotation du moteur à combustion interne.
